# FASCICULE DE BREVET EUROPEEN

(11) **EP 0 785 046 B1**
(45) Date de publication et mention de la délivrance du brevet: **29.05.2002**
(21) Numéro de dépôt: 96402870.8
(22) Date de dépôt: 23.12.1996
(51) Int. Cl.: B23P 15/00, B60P 3/22, E04H 7/04, B21D 51/18, B65D 88/06, B21D 51/24

(54) **Procédé de conception et d'industrialisation d'une structure sensiblement rigide en forme d'enveloppe contenante telle que citerne routière**
Entwurfs- und Industrialisierungsverfahren für eine starre Struktur, die als Behälter geformt ist, wie ein Tankwagen
Method of design and industrialisation for a rigid structure formed as a container, such as a road tanker

(30) Priorité: 19.01.1996 FR 9600616
(43) Date de publication de la demande: 23.07.1997
(73) Titulaire: DINOVRAC SA, 64360 Monein (FR)
(72) Inventeur: Merceron, Jean-Jacques, 86220 Vau sur Vienne (FR)
(74) Mandataire: Derambure, Christian

(56) Documents cités:
- DE-A- 3 038 517
- DE-A- 3 541 333
- DE-U- 9 308 124
- PATENT ABSTRACTS OF JAPAN vol. 18, no. 368 (M-1637), 12 Juillet 1994 & JP 06 100073 A (SHOWA AIRCRAFT IND), 12 Avril 1994,
- PATENT ABSTRACTS OF JAPAN vol. 00, no. 00 & JP 07 148574 A (SHOWA AIRCRAFT IND), 13 Juin 1995,

## Description

L'invention se rapporte à un procédé de conception et de réalisation d'une structure sensiblement rigide en forme d'enveloppe contenante, telle que citerne routière.

On connaît déjà des procédés de réalisation de tels contenants, (voir par exemple DE-U-93 08 124).

Classiquement, ces procédés incluent des opérations de matriçage ou d'emboutissage de feuilles métalliques. permettant d'aboutir à une pièce tridimensionnelle de forme prédéterminée.

En particulier, les pièces d'aboutement définissant les fonds bombés des citernes sont obtenues par de telles opérations de matriçage ou d'emboutissage.

De tels procédés impliquent une conception et une réalisation de contrempreintes en matériaux résistants aux contraintes mécaniques et thermiques importantes présentes lors de la déformation de la feuille métallique déstinée à former la pièce en volume.

De ce fait, ces procédés conventionnels sont onéreux, et ce d'autant plus que le nombre de pièces à fabriquer est faible.

De plus. ces procédés sont dépourvus de souplesse en ce sens qu'une modification d'une seule caractéristique de forme et/ou de dimension de la pièce en volume à réaliser, entraîne dans le meilleur des cas un surcoût important en usinage après mise en forme et dans le pire des cas un changement de l'outillage de mise en forme.

Par ailleurs, ces procédés conventionnels impliquent si l'on souhaite réaliser des pièces en volume différentes, de stocker une grande variété d'outillage de mise en forme, et éventuellement de pièces en volume finies ou saint-finies. afin de minimiser la fréquence de changement d'outillage.

On connaît par ailleurs, des contenants tels que des silos réalisés, au moins en partie par mécanosoudage.

Un tel procédé de fabrication est bien adapté à la réalisation de petites séries, en particulier de pièces uniques.

En effet la mise en forme des feuilles de matières tel que métal pour obtenir une partie ou la totalité d'une pièce en volume est réalisée à l'aide de machines outils conventionnelles de pliage, cintrage, sans fabrication d'un outillage spécifiquement dévolu à la pièce en volume envisagée.

Un tel procédé de fabrication est également bien adapté à la réalisation de pièces de grandes dimensions, éventuellement de formes complexes.

Classiquement, un tel procédé de fabrication inclut une étape de conception et réalisation de pièces découpées dans des plaques de métal planés, les découpes réalisées correspondant aux formes développées des éléments de la structure en volume.

Classiquement, la conception de ces découpes est réalisée à la main ou par le biais d'abaques de pliage.

Il en résulte qu'un tel procédé ne peut être mis en oeuvre due par un homme de métier expérimenté.

Par ailleurs,une modification d'un seul parametre de dimension ou de forme de la structure en volume à réaliser implique le plus souvent de recommencer entierement la conception des découpes, d'où une perte de temps considérable et un manque de souplesse dans l'utilisation courante d'un tel procédé.

Par ailleurs, l'optimisation des formes et dimensions des découpes en vue d'obtenir une structure qui présente les fonctionnalités d'utilisation telles que contenance, encombrement optimum n'est le plus souvent pas envisagée, compte tenu du temps nécessaire à la conception de ces découpes.

La présente invention vise à fournir un procédé de conception et d'industrialisation d'une structure sensiblement rigide en forme d'enveloppe contenante qui ne présente pas les défauts des procédés mentionnés auparavant.

En particulier, le procédé selon l'invention est simple à mettre en oeuvre, souple d'utilisation, rapide et permet de concevoir et d'optimiser les formes développées des éléments d'une structure, telle qu'une citerne routière, peu coûteuse, facile à fabriquer, esthétique et satisfaisant à des spécifications générales telles que gabarit et fonctionnalités d'utilisation telles que contenance ou pression interne maximale.

A cette fin, le procédé selon l'invention de conception et de réalisation d'une structure sensiblement rigide en forme d'enveloppe contenante est tel que après choix d'un type de structure tel que citerne routière ou silo et déterminations des spécifications générales telles que gabarit et des fonctionnalités d'utilisation telles que contenance ou pression interne maximale dudit type de structure, est prévue une étape de calcul d'un profil global de ladite structure, apte à satisfaire aux spécifications générales ainsi qu'aux fonctionnalités d'utilisation de ladite structure, ce profil étant décomposabte en :
- au moins un élément porteur, en forme de pièce développable, par exemple inscrite dans un cylindre ou un cône, et assimilable à une poutre :

- au moins un élément juxtaposable d'aboutement, en forme de pièce développable, apte à être rigidement solidarisé, par exemple par soudage, à un autre élément d'aboutement et/ou à un élément porteur, caractérisé en ce que

Cet élément d'aboutement est constitué uniquement par des pièces de tôles découpées, pliées et soudées de sorte que le procédé puisse ne comporter aucune étape d'emboutissage ou de matriçage.

Selon un autre aspect, le procédé est tel qu'est prévue une étape d'optimisation des dimensions et/ou formes des éléments du profil aptes à maximiser le volume intérieur d'une structure telle qu'une citerne tout en respectant les spécifications générales de ce type de structure.

Selon un autre aspect, le procédé est tel qu'est prévue une étape d'optimisation des dimensions et/ou formes des éléments du profil aptes à minimiser les inflexions et changements de courbure dans les zones de juxtaposition des éléments du profil, par exemple les zones de soudage.

Selon encore un autre aspect, le procédé est tel qu'il comprend une étape de représentation et visualisation des éléments du profil, assemblés ou non, dans leurs formes développées ou selon un plan de coupe ou une vue externe quelconques du profil et/ou une étape d'enregistrement des formes développées comprenant des données dimensionnelles telles que cotes des éléments du profil sur un support, ainsi qu'une étape de commande d'une machine d'usinage, par exemple de découpe, à l'aide des données de support.

Selon encore un autre aspect, le procédé est tel qu'il comprend une étape consistant à fabriquer au moins un des éléments du profil, par exemple par découpage et/ou mise en forme d'une ou plusieurs pièces de matériau rigide tel que métal et cintrage ou pliage de ces pièces ; et que, suite à l'étape de réalisation d'un ou plusieurs éléments du profil, il comprend l'étape consistant à assembler ces éléments en une sous structure, par exemple par soudage.

Selon encore un autre aspect, le procédé est tel qu'il comprend une étape consistant à fixer au moins un élément et/ou une sous structure du profil sur au moins un organe de la structure n'appartenant pas au profil, tel que vanne, essieu, montant, système d'amarrage et/ou de traction, par exemple par soudage et/ou rivetage et/ou boulonnage et/ou collage, et qu'en cas de modification des spécifications générales et/ou des fonctionnalités précises de la structure, est prévue une étape consistant à corriger les formes et/ou dimensions d'au moins un élément du profil par calcul.

D'autres avantages et objets de l'invention apparaîtront au cours de la description suivante, réalisée en se référant aux dessins annexés dans lesquels :
- la figure 1 est un diagramme symbolisant les principales étapes du procédé selon l'invention ;
- les figures 2 à 5 sont des représentations d'une structure contenante telle qu'une citerne routière, réalisée selon l'invention,

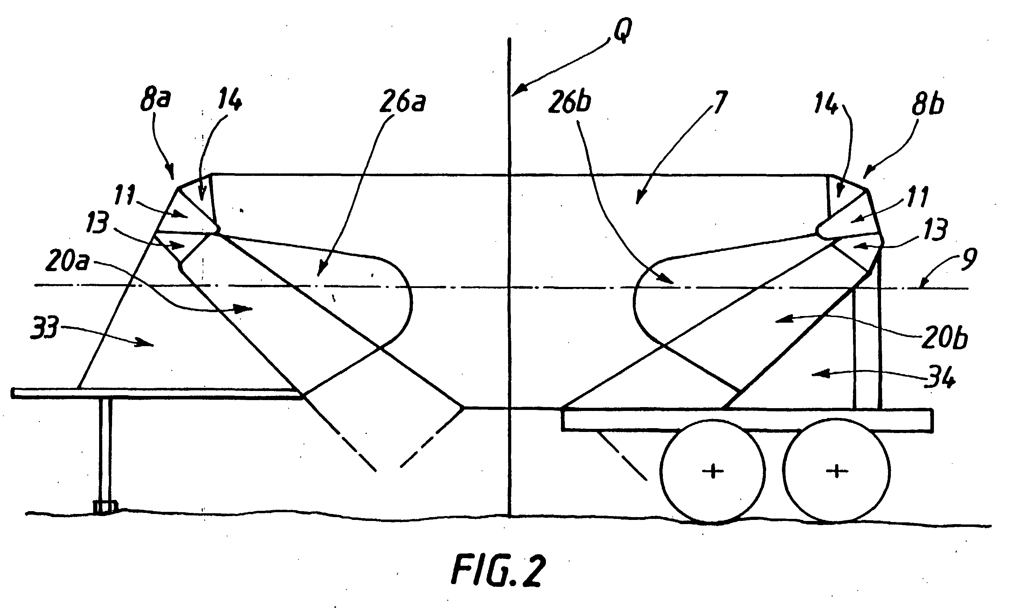

- la figure 2 étant une vue externe face à l'une des deux grandes surfaces latérales de la citerne ;

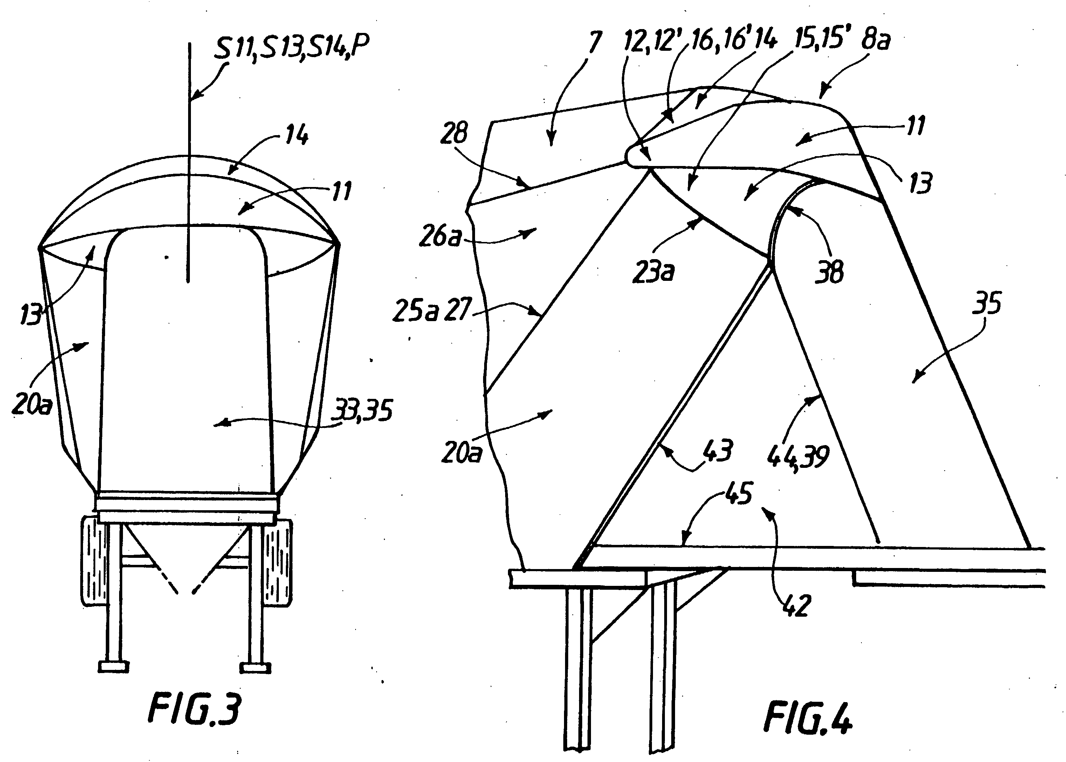

- la figure 3 étant une vue externe face à la surface avant de la citerne ;
- la figure 4 étant une vue externe en perspective de la partie avant de la citerne ;

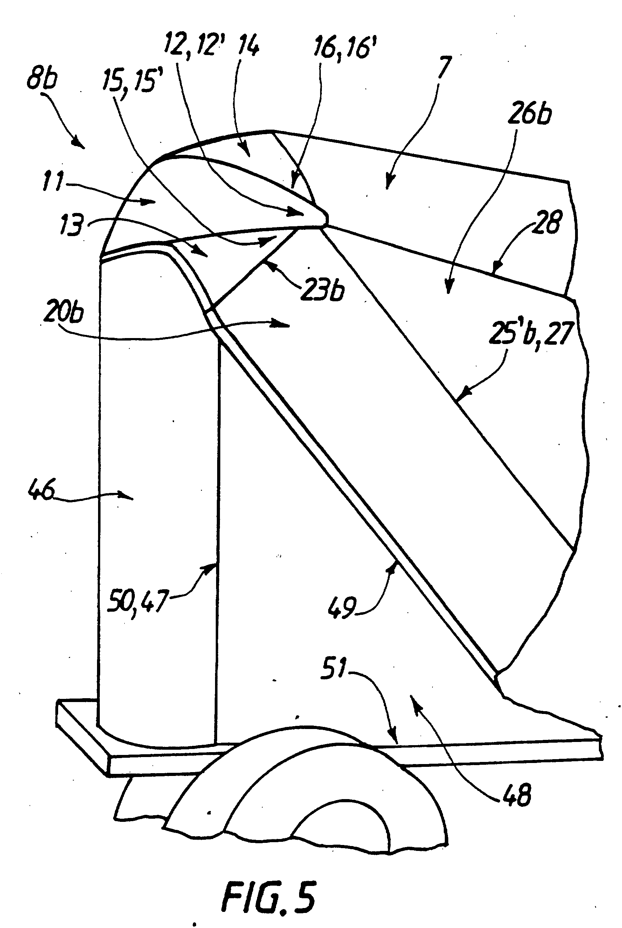

- la figure 5 étant une vue externe en perspective de la partie arrière de la citerne ;

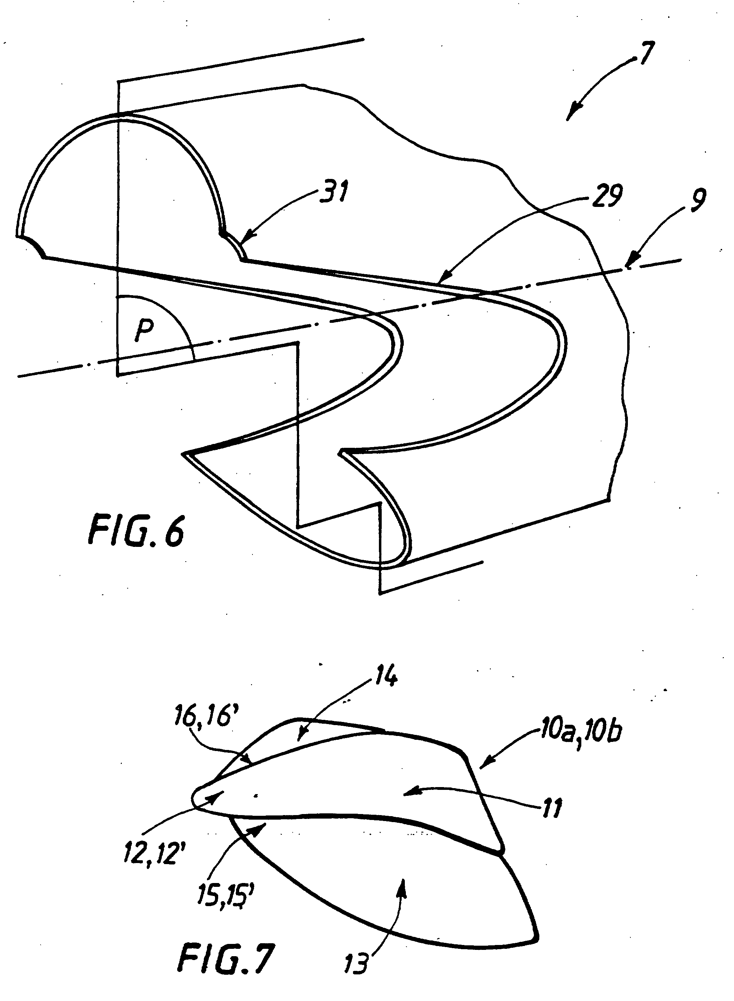

- les figures 6 à 12 sont des vues partielles des pièces formant la citerne représentée en figures 2 à 5;
- la figure 6 est une vue en perspective de l'enveloppe principale de la citerne ;
- la figure 7 est une vue en perspective d'une partie d'une extrémité bombée de la citerne, formant calotte ;

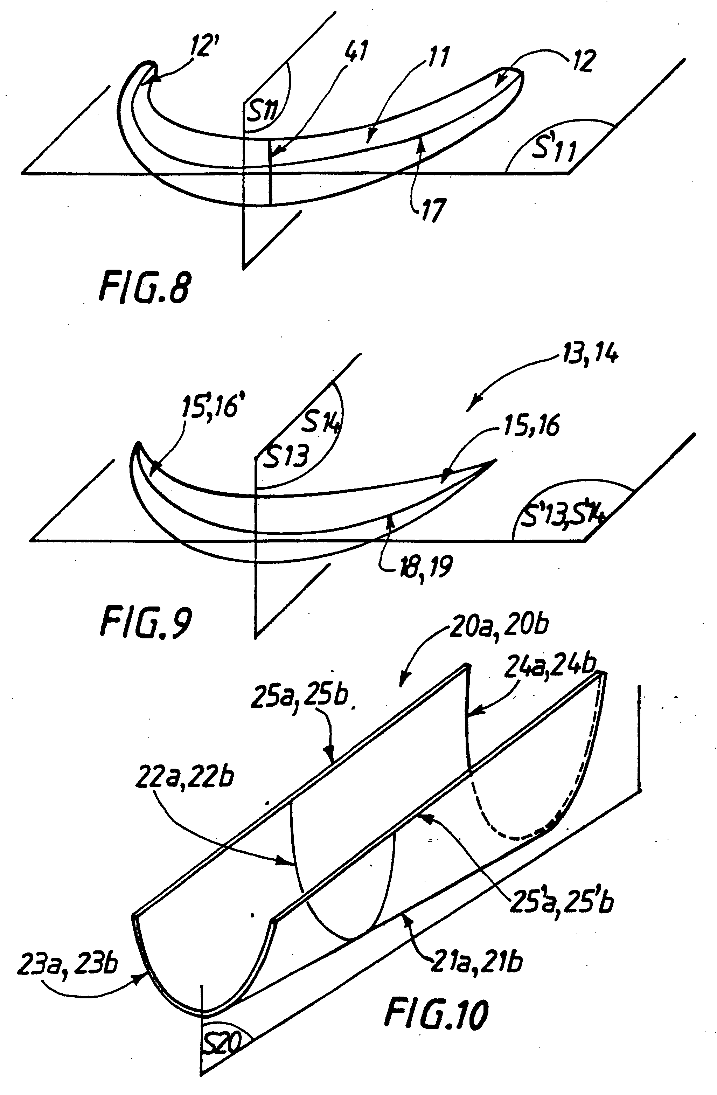

- les figures 8 et 9 sont des vues schématiques des pièces et de la bande oblongue respectivement, formant une calotte telle que représentée en figure 7 ;

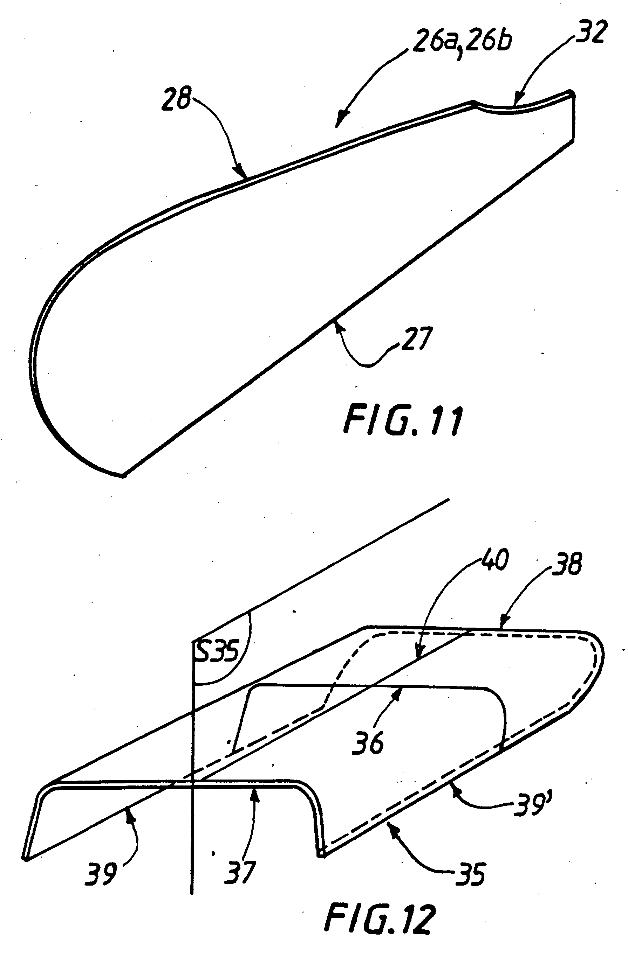

- la figure 10 est une vue en perspective d'une pièce intermédiaire ;
- la figure 11 est une vue en perspective d'une pièce de liaison ;
- la figure 12 est une vue en perspective d'une première pièce d'un élément de renfort ;

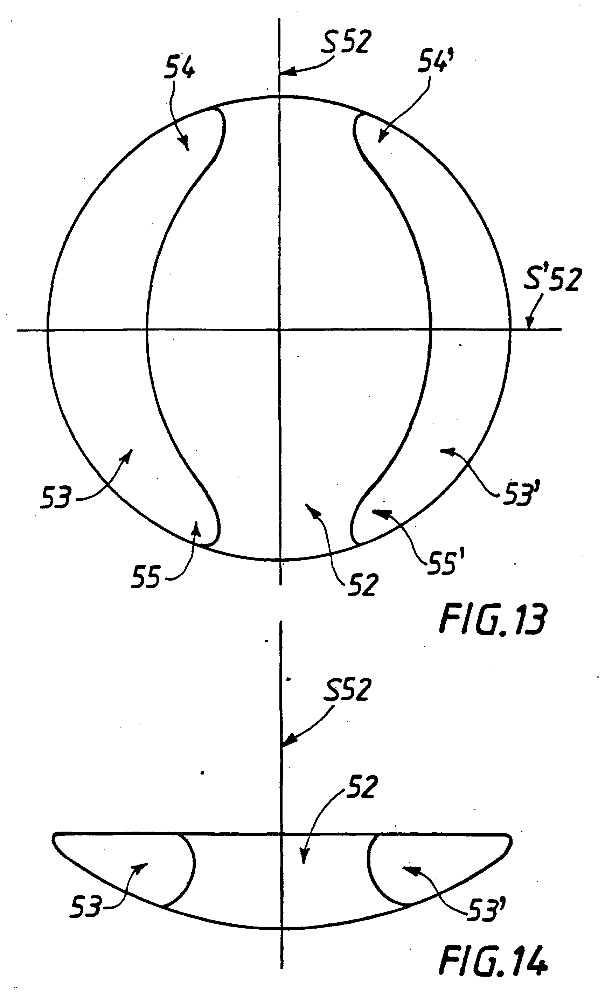

- la figure 13 est une vue externe d'un autre mode de réalisation d'une extrémité bombée d'un contenant tel qu'une citerne ;
- la figure 14 est une vue de côté de l'extrémité bombée représentée en figure 13 ;

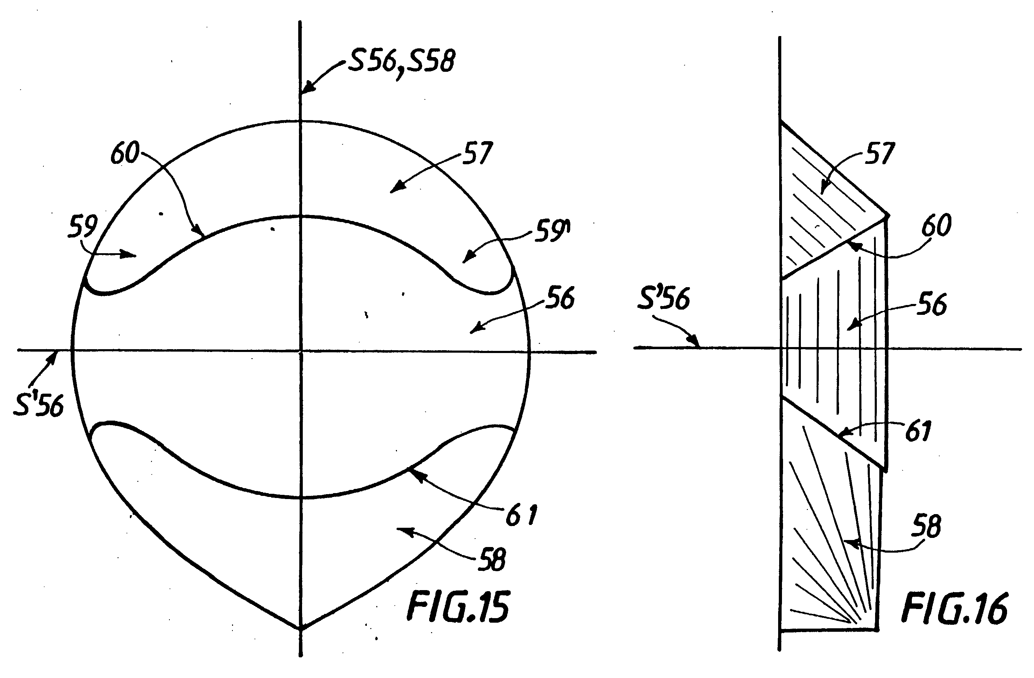

- la figure 15 est une vue externe d'un autre mode encore de réalisation d'une extrémité bombée d'un contenant tel qu'une citerne ;
- la figure 16 est une vue de côté de l'extrémité bombée représentée en figure 15 ;

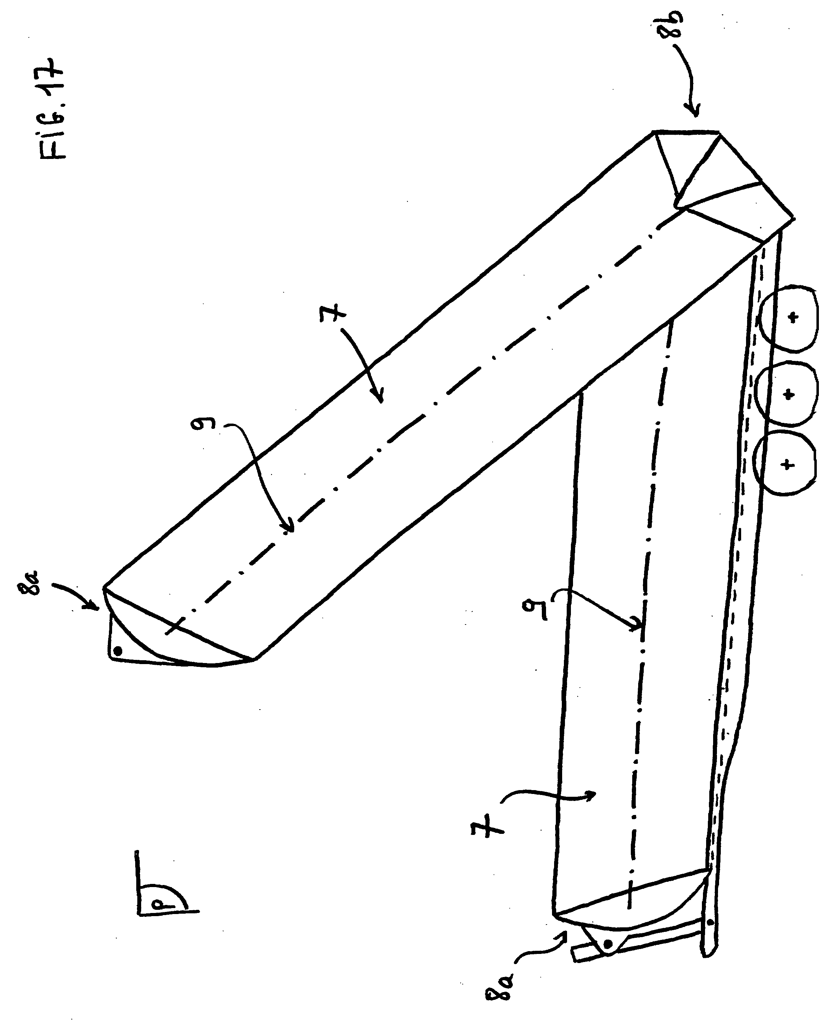

- la figure 17 est une vue latérale schématique d'une citerne routière, selon un autre mode de réalisation de l'invention.

Le procédé de conception et d'industrialisation d'une structure sensiblement rigide en forme d'enveloppe contenante, telle que citerne routière va maintenant être décrit.

Préalablement à la mise en oeuvre de ce procédé, il convient de déterminer les spécifications générales telles que hauteur, longueur de la structure à réaliser. Ces spécifications générales définissent un gabarit, c'est-à-dire une forme générale de la structure. Cette forme générale est éventuellement imposée par des réglementations diverses, en particulier des règles de sécurité.

Préalablement à la mise en oeuvre du procédé, il convient également de déterminer les fonctionnalités d'utilisation de la structure à réaliser. Ces fonctionnalités sont par exemple la contenance, la pression interne, le mode de remplissage ou de vidange éventuels de la structure. Les fonctionnalités d'utilisation peuvent être imposées par une application particulière, comme par exemple le type de produit contenu ou circulant dans la structure.

Après détermination des spécifications générales et fonctionnalités d'utilisation du type de structure à réaliser, le procédé prévoit une étape 1 de calcul d'un profil global de ladite structure, apte à satisfaire aux spécifications générales ainsi qu'aux fonctionnalités d'utilisation de ladite structure, ce profil étant décomposable en :
- au moins un élément porteur A, en forme de pièce développable par exemple inscrite dans un cylindre ou un cône, assimilable à une poutre ;
- au moins un élément juxtaposable B d'aboutement, en forme de pièce développable, apte à être rigidement solidarisé, par exemple par soudage, à un autre élément d'aboutement B' et/ou à un élément porteur A, de sorte que le procédé puisse ne comporter aucune étape d'emboutissage ou de matriçage.

A la suite de l'étape 1 de calcul du profil général de la structure, le procédé peut comprendre une étape 2 éventuelle d'optimisation des dimensions et/ou formes des éléments du profil apte à maximiser le volume intérieur de la structure tout en respectant les spécifications générales de ce type de structure.

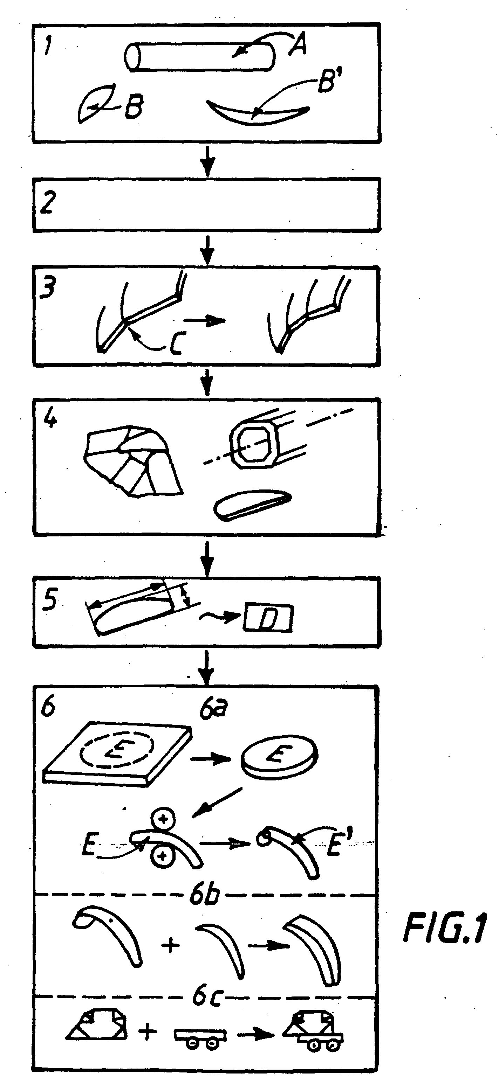

A la suite de l'étape 2, ou de l'étape 1 dans le cas où l'étape 2 n'a pas été mise en oeuvre, le procédé peut comprendre une étape 3 d'optimisation des dimensions et/ou formes des éléments du profil apte à minimiser les inflexions et changements de courbure C dans les zones de juxtaposition des éléments du profil, par exemple dans les zones de soudage. Cette étape 3 peut éventuellement consister à disposer un élément supplémentaire dans le profil, comme représenté schématiquement en figure 1.

A la suite de l'étape 3, ou de l'étape 2 si l'étape 3 n'a pas été mise en oeuvre, ou directement à la suite de l'étape 1 si les étapes 2 et 3 n'ont pas été mises en oeuvre, est prévue une étape 4 de représentation et visualisation des éléments du profil. Ces éléments peuvent être vus assemblés ou non, dans leurs formes développées ou selon un plan de coupe ou bien encore une vue externe quelconque du profil.

A la suite de l'étape 4, le procédé prévoit une étape 5, éventuelle, d'enregistrement des formes développées avec cotes dimensionnelles des éléments du profil sur un support D apte à être utilisé comme commande d'une machine d'usinage, par exemple de découpe.

A la suite de l'étape 5, ou directement à la suite de l'étape 4 dans le cas où l'étape 5 n'a pas été mise en oeuvre, est prévue une étape 6 consistant à fabriquer au moins un ou la totalité des éléments du profil.

Dans un premier temps 6a, cette fabrication est réalisée par exemple par découpage et/ou mise en forme d'une pièce de matériau rigide tel que métal, la mise en forme étant opérée par cintrage ou pliage.

Dans un deuxième temps 6b, cette fabrication comprend une étape d'assemblage des éléments du profil obtenus, par exemple par soudage et/ou rivetage et/ou boulonnage et/ou collage, pour former au moins une sous structure.

Dans un troisième temps, 6c, cette fabrication comprend une étape consistant à fixer au moins un élément et/ou une sous structure du profil sur au moins un organe de la structure n'appartenant pas au profil tel que vanne, essieu, montant, système d'amarrage, cette fixation étant obtenue par exemple par soudage et/ou rivetage et/ou boulonnage et/ou collage.

Lorsque tous les éléments de la structure sont assemblés, la structure achevée peut bien évidemment faire l'objet de travaux de finition tels que traitements de surface ou superficiels comme sablage, grenaillage, dépôts chimiques ou physiques anticorrosion, peinture.

Le procédé de fabrication et d'industrialisation est tel que, dans le cas où sont opérées des modifications de spécifications générales et/ou fonctionnalités d'utilisation de la structure, est prévue une étape consistant à corriger les formes et/ou dimensions d'au moins un élément du profil par calcul.

Cette étape de correction peut éventuellement tenir compte des pièces de la structure déjà fabriquées, et ne modifier que celles restant à fabriquer.

Ce qui confère une grande souplesse au procédé de fabrication.

On décrit maintenant une structure obtenue selon le procédé présenté ci-dessus, telle que représentée en figures 1 à 12.

La citerne routière telle que représentée comprend un élément porteur, sous forme d'une enveloppe principale cylindrique développable 7, et des extrémités bombées 8a, 8b.

Dans d'autres modes de réalisation, non représentés, la citerne comprend une seule extrémité bombée, l'autre étant sensiblement plane ou bien encore deux extrémités sensiblement planes.

Dans d'autres modes de réalisation, non représentés, la citerne comprend une enveloppe principale formée essentiellement par l'assemblage de pièces cylindriques et/ou cylindroconiques développables.

L'axe d'élancement 9 de l'enveloppe principale 7 est horizontal ou sensiblement horizontal dans le mode de réalisation représenté.

Dans d'autres modes de réalisation, non représentés, l'axe d'élancement de l'enveloppe principale est vertical ou sensiblement vertical, ou bien encore oblique.

Le contour de l'enveloppé principale 7, vu en coupe, perpendiculairement à l'axe d'élancement 9 forme une conique telle qu'une ellipse, un cercle, ou forme un polygone ou bien encore une courbe comprenant des parties polygonales et des tronçons de coniques.

L'enveloppe principale 7 comprend une seule pièce développable où est formée essentiellement d'un assemblage de pièces développables.

Dans le mode de réalisation représenté, l'enveloppe principale 7 comprend une seule pièce développable dont le contour vu en coupe, perpendiculairement à l'axe d'élancement 9, est sensiblement contenu dans une ellipse.

L'enveloppe principale 7 présente un plan P de symétrie, vertical, contenant l'axe 9.

Dans d'autres modes de réalisation, non représentés, l'enveloppe principale est dépourvue de plan de symétrie vertical et/ou de plan de symétrie.

Les extrémités bombées 8a et 8b comprennent au moins une pièce, développable.

Dans le mode de réalisation représenté, les extrémités bombées 8a et 8b forment des calottes 10a et 10b sensiblement circonscrites dans des ellipsoïdes.

Les calottes 10a et 10b sont de formes générales et dimensions sensiblement identiques, ou bien de formes générales différentes par exemple hemisphériques et hemielliptiques, et/ou de dimensions différentes.

Dans le mode de réalisation représenté en figure 2, chaque calotte 10a, 10b comprend une bande 11 oblongue, centrale, développable, en forme générale de croissant dont les extrémités latérales 12, 12' sont arrondies ou courbées.

Chaque calotte 10a, 10b comprend également deux pièces 13 et 14, oblongues, développables, en forme générale de croissant dont les extrémités latérales 15, 15' et 16, 16' respectivement sont aigües.

Une bande 11 présente deux plans de symétrie orthogonaux S11 et S'11.

De même, chacune des pièces 13 et 14 présentent deux plans de symétrie orthogonaux S13, S'13 et S14, S'14 respectivement.

Les pièces 13 et 14 et la bande 11 de chaque calotte 10a, 10b sont assemblées rigidement entre elles par exemple par soudage et/ou rivetage et/ou boulonnage et/ou collage.

Dans le mode de réalisation représenté en figure 2, dans chaque calotte 10a, 10b, les pièces 13 et 14 sont disposées de part et d'autre de la bande 11, de sorte que les concavités des pièces 13 et 14 et de la bande 11 soient orientées dans le même sens, et que les plans de symétrie S11, S13 et S14 soient confondus.

Le profil de la bande 11, pris dans le plan de symétrie S'11 forme une courbe 17 dont la longueur est supérieure à celles des courbes 18 et 19 correspondant aux profils des pièces 13 et 14 pris dans leurs plans de symétrie S'13 et S'14 respectivement.

Les longueurs des courbes 18 et 19 sont sensiblement égales, dans le mode de réalisation représenté.

Chaque calotte 10a et 10b est assemblée à l'enveloppe principale 7 par exemple par soudage et/ou rivetage et/ou boulonnage et/ou collage.

Dans le mode de réalisation représenté, chaque calotte 10a, 10b est assemblée à l'enveloppe principale de telle sorte que les calottes soient en partie haute de la citerne et que les plans de symétrie P, S11, S13, et S14 soient confondus.

Dans un autre mode de réalisation, non représenté, chaque calotte est assemblée à l'enveloppe principale de telle sorte que les plans de symétrie S11, S13 et S14 soient sensiblement perpendiculaires au plan P.

Dans le mode de réalisation représenté en figure 2, l'enveloppe principale 7 et les calottes 10a et 10b ne définissent pas une enceinte sensiblement fermée.

Dans d'autres modes de réalisation, non représentés, l'enveloppe principale et deux calottes comprenant chacunes au moins une pièce concave développable définissent une enceinte sensiblement fermée.

La citerne telle que représentée en figure 2 comprend, outre une enveloppe principale 7 et des extrémités bombées 8a et 8b, des pièces intermédiaires 20a et 20b.

Dans le mode de réalisation représenté en figure 2, ces pièces 20a et 20b sont sensiblement équivalentes dans leurs formes et disposées symétriquement par rapport à un plan Q, vertical, situé sensiblement à mi longueur de l'axe d'élancement 9.

Dans d'autres modes de réalisation, non représentés, les pièces 20a et 20b ne sont pas équivalentes dans leurs formes et/ou ne sont pas disposés symétriquement par rapport à un plan vertical quelconque.

Les pièces 20a et 20b sont développables, concaves et présentent chacune un plan de symétrie S20.

Le profil des pièces 20a et 20b, pris dans le plan de symétrie S20 forme sensiblement une droite 21a, 21b respectivement.

Les droites 21a et 21b sont obliques. De préférence, les droites 21a et 21b forment un angle de 45° avec la verticale.

Les profils 22a et 22b des pièces 20a ou 20b, pris dans des plans perpendiculaires aux lignes 21a ou 21b respectivement, s'inscrivent dans une conique telle qu'une ellipse, un cercle, ou dans un polygone ou bien encore dans une courbe comprenant des parties polygonales et des tronçons de coniques.

Dans le mode de réalisation représenté en figure 10, les profils 22a et 22b sont superposables et s'inscrivent dans une ellipse.

Les pièces intermédiaires 20a et 20b comprennent des bords concaves 23a, 24a, et 23b, 24b respectivement et des bords sensiblement rectilignes 25a, 25'a et 25b, 25'b respectivement.

Les bords 23a et 23b sont sensiblement contenus dans un plan perpendiculaire aux droites 21a et 21b respectivement.

Ces bords sont associés rigidement par soudage et/ou boulonnage et/ou rivetage et/ou collage aux calottes 10a et 10b respectivement.

Les bords 24a et 24b sont contenus dans un plan légèrement incliné par rapport au plan perpendiculaire aux droites 21a et 21b respectivement.

Les bords 24a et 24b sont associés rigidement par soudage et/ou boulonnage et/ou rivetage et/ou collage à une pièce, non représentée, formant cône de vidange.

Les bords rectilignes 25a, 25'a et 25b, 25'b sont associés rigidement par soudage et/ou boulonnage et/ou rivetage et/ou collage aux pièces de liasion 26a et 26b respectivement.

Les pièces de liaison 26a et 26b présentent un bord rectiligne 27 et un bord courbé 28.

Un bord 27 est associé rigidement à un bord 25a, 25'a ou 25b, 25'b des pièces 20a ou 20b.

Un bord 28 est associé rigidement à l'enveloppe principale 7 qui présente un bord 29 complémentaire.

Dans le mode de réalisation représenté en figure 2, les extrémités arrondies 12, 12' des bandes oblongues 11 présentent un contour 30 complémentaire des parties de contour 31 et 32 de l'enveloppe principale 7 et d'une pièce de liaison 26a, 26b respectivement.

Cette disposition, issue de l'optimisation des formes du profil par le procédé de l'invention, participe à la rigidité de la structure et facilite l'assemblage, en particulier par mécanosoudage.

Les éléments 7, 10a, 10b, 20a, 20b, 26a, 26b de la citerne telle que représentée en figure 2 forment une enceinte sensiblement fermée, excepté dans la zone des cônes de vidange, non représentée.

L'enceinte ainsi formée est fixée sur un châssis, tel que symbolisé en figure 2.

Des éléments de renforts 33 et 34 sont disposés entre les pièces oblongues 13, les pièces complémentaires 20a, 20b d'une part et le châssis d'autre part.

L'élément de renfort 33, disposé à l'avant de la citerne routière, comprend une première pièce 35, développable, concave, et présentant un plan de symétrie S35.

Le profil 36 de la première pièce 35, vu dans un plan perpendiculaire au plan de symétrie S35 est sensiblement en forme d'un U.

La première pièce 35 présente deux bords courbés latéraux 37 et 38 et deux bords rectilignes 39, 39'.

Le bord 37 est destiné à être assemblé rigidement à la surface extérieure de la pièce oblongue 13 de l'extrémité bombée 8a.

Le bord 38 est destiné à être assemblé rigidement au châssis du camion citerne.

Dans le mode de réalisation représenté, la pièce 35 est assemblée à l'enceinte formant contenant de telle sorte que les plans de symétrie P et S35 soient confondus et que le bord 37 de la pièce 35 soit tangent, dans sa partie sensiblement rectiligne, à la zone de juxtaposition de la pièce oblongue 13 avec la bande 11 du fond bombé 8a. La pièce 35 présente un profil 40, pris dans le plan de symétrie S35. Le profil 40 est sensiblement rectiligne et situé dans l'alignement du profil 41 de la bande 11, pris dans le plan de symétrie S11.

L'élément de renfort 33 comprend, outre la première pièce 35, deux pièces sensiblement planes, triangulaires 42 et 42' disposées verticalement, et symétriquement par rapport au plan P.

Un bord 43 des pièces 42, 42' est destiné à être assemblé à la surface extérieure de la pièce intermédiaire 20a.

Un bord 44 des pièces 42, 42' est destiné à être assemblé à un bord 39, 39' de la pièce 35.

Un bord 45 des pièces 42, 42' est destiné à être assemblé au châssis.

L'élément de renfort 34, disposé à l'arrière de la citerne routière, comprend une première pièce 46 sensiblement équivalente à la première pièce 35 de l'élément de renfort 33. Cependant, la pièce 46 est disposée de telle sorte que ses bords latéraux rectilignes 47 et 47' soient sensiblement verticaux et que son bord supérieur soit tangent, dans sa partie sensiblement rectiligne, à la zone de juxtaposition de la pièce oblongue 13 avec la bande 11 du fond bombé 8b.

L'élément de renfort 34 comprend en outre, deux pièces sensiblement planes, triangulaires 48 et 48', disposées verticalement, et symétriquement par rapport au plan P.

Un bord 49 des pièces 48, 48' est destiné à être assemblé à la surface extérieure de la pièce intermédiaire 20b.

Un bord 50 des pièces 48, 48' est destiné à être assemblé à un bord 47, 47' de la pièce 46.

Un bord 51 des pièces 48, 48' est destiné à être assemblé au châssis.

La structure contenante qui vient d'être décrite, élaborée par le procédé de l'invention, est une citerne autoportante apte à transporter des matériaux pulvérulents tels que farine, ciment, granulés.

Cette citerne comprend au moins une trémie d'évacuation conique ainsi qu'au moins une ouverture de remplissage.

Les matériaux constitutifs des parois 7, 8a, 8b, 20a, 20b, 26a et 26b ainsi que des trémies d'évacuation sont choisis parmi le groupe comprenant les aciers de construction, les aciers inoxydables, les alliages d'aluminium, les composites à matrice métallique et les métaux ou alliages métalliques aptes à être déformés par exemple par cintrage, pliage, sans s'endommager.

La structure peut comprendre au moins une trémie d'évacuation, par exemple conique, qui peut être telle que la direction d'évacuation est parallèle, oblique ou perpendiculaire à l'axe 9 d'élancement de l'élément 7, l'axe 9 étant horizontal, vertical ou oblique.

Les extrémités bombées 8a et 8b peuvent avoir des formes générales différentes de celles décrites ci-dessus en référence aux figures 1 à 12.

Une extrémité peut avoir une forme telle que représentée en figures 13 et 14, l'autre extrémité étant sensiblement plane ou telle que décrite auparavant en référence aux figures 1 à 12.

L'extrémité bombée représentée en figures 13 et 14 comprend une pièce centrale 52 présentant deux plans de symétrie S52, S52' et deux pièces latérales 53 et 53' en forme générale de croissant dont les extrémités 54, 55 et 54', 55' sont arrondies.

Les pièces 52, 53 et 53' sont développables.

Dans le mode de réalisation représenté en figures 13 et 14, les pièces latérales 53 et 53' sont superposables et disposées symétriquement par rapport au plan de symétrie S52.

Une extrémité peut avoir une forme telle que représentée en figures 15 et 16, l'autre extrémité étant sensiblement plane ou telle que décrite auparavant en référence aux figures 1 à 14.

L'extrémité bombée représentée en figures 15 et 16 comprend une pièce centrale 56 présentant deux plans de symétrie S56, S56' et deux pièces latérales 57 et 58.

La pièce latérale 57 est en forme générale de croissant dont les extrémités 59, 59' sont arrondies.

La pièce latérale 57 est solidarisée rigidement, par exemple par soudage, à la pièce centrale 56, le long d'une ligne courbe 60.

La pièce latérale 58 est en forme générale de cône et est solidarisée rigidement, par exemple par soudage, à la pièce centrale 56, le long d'une ligne courbe 61 symétrique de la courbe 60 par rapport au plan S56

Dans le mode de réalisation représenté, la pièce latérale 58 en forme de cône présente un plan S58 de symétrie parallèle au plan S'56 de la pièce centrale 56.

Les pièces 56, 57 et 58 sont développables.

Une citerne routière obtenue à partir du procédé de l'invention peut comprendre une enveloppe principale cylindrique développable et au moins une extrémité bombée telle que représentée en figures 13, 14 ou 15, 16 respectivement.

Dans le cas où la citerne comprend une extrémité bombée telle que représentée en figure 13 et une autre extrémité bombée telle que représentée en figure 14, les pièces 52 et 56 peuvent être de formes et dimensions sensiblement identiques, de même que, éventuellement, les pièces 53, 53' et 57.

La figure 17 présente un autre mode de réalisation d'une citerne, obtenu grâce au procédé selon l'invention.

Dans ce mode de réalisation, les extrémités bombées 8a et 8b de la citerne ne sont pas de formes équivalentes.

## Revendications

1. Procédé de conception et de réalisation d'une structure sensiblement rigide en forme d'enveloppe contenante, dans lequel après choix d'un type de structure tel que citerne routière ou silo et déterminations des spécifications générales telles que gabarit et des fonctionnalités d'utilisation telles que contenance ou pression interne maximale dudit type de structure, le procédé comprend une étape initiale (1) de calcul d'un profil global de ladite structure, apte à satisfaire aux spécifications générales ainsi qu'aux fonctionnalités d'utilisation de ladite structure, ce profil étant décomposable en :
- au moins un élément porteur (7) en forme de pièce développable, par exemple inscrite dans un cylindre ou un cône, et assimilable à une poutre;
- au moins un élément juxtaposable d'aboutement (8a, 8b), en forme de pièce développable, apte à être rigidement solidarisé, par exemple par soudage, à un autre élément d'aboutement et/ou à un élément porteur, **caractérisé en ce que**
cet élément d'aboutement (8a, 8b) est constitué uniquement par des pièces de tôles découpées, pliées et soudées de sorte que le procédé puisse ne comporter aucune étape d'emboutissage ou de matriçage.

2. Procédé selon la revendication 1, **caractérisé en ce qu'**est prevue une étape (2) d'optimisation des dimensions et/ou formes des éléments du profil aptes a maximiser le volume intérieur d'une structure telle qu'une citerne tout en respectant les spécifications générales de ce type de structure.

3. Procédé selon la revendication 1 ou 2, **caractérisé en ce qu'**est prévue une étape (3) d'optimisation des dimensions et/ou formes des éléments du profil apte a minimiser les inflexions et changements de courbure dans les zones de juxtaposition des eléments du profil, par exemple les zones de soudage.

4. Procédé selon l'une quelconque des revendications 1 à 3, **caractérise en ce qu'**il comprend une étape (4) de représentation et visualisation des éléments du profil, assemblés ou non, dans leurs formes développées ou selon un plan de coupe ou une vue externe quelconques du profil.

5. Procédé selon l'une quelconque des revendications 1 à 4, **caractérisé en ce qu'**il comprend une étape (5) d'enregistrement des formes développées comprenant des données dimensionnelles telles que cotes des éléments du profil sur un support, aini qu'une étape de commande d'une machine d'usinage, par exemple de découpe, à l'aide des données du support.

6. Procédé selon l'une quelconque des revendications 1 à 5, **caractérisé en ce qu'**il comprend une étape (6a) consistant à fabriquer au moins un des éléments du profil, par exemple par découpage et/ou mise en forme d'une ou plusieurs pièces de matériau rigide tel que métal et cintrage ou pliage de ces pièces.

7. Procède selon la revendication 6, **caractérisé en ce que**, suite à l'étape 6a de réalisation d'un ou plusieurs éléments du profil, ii comprend l'étape (6b) consistant a assembler ces éléments en une sous structure, par exemple par soudage.

8. Procède selon la revendication 7, **caractérisé en ce qu'**il comprend l'étape (6c) consistant à fixer au moins un elément et/ou une sous structure du profil sur au moins un organe de la structure n'appartenant pas au profil, tel que vanne, essieu, montant, systeme d'amarrage et/ou de traction, par exemple par soudage et/ou rivetage et/ou boulonnage et/ou collage.

9. Procédé selon l'une quelconque des revendications 1 à 8, **caractérisé en ce que**, en cas de modification des spécifications générales et/ou des fonctionnalités precises de la structure, est prévue une étape consistant a corriger les formes et/ou dimensions d'au moins un élément du profil par calcul.

## Patentansprüche

1. Design- und Herstellungsverfahren einer etwa steifen Struktur in Form eines Behälters, bei dem das Verfahren nach Wahl eines Strukturtyps, wie Straßenzisterne oder Silo, und Bestimmung der allgemeinen Spezifikationen, wie Lademaß, und der Benutzungsfunktionalitäten, wie Fassungsvermögen oder maximaler Innendruck des besagten Strukturtyps, eine Anfangsetappe (1) für die Berechnung eines Gesamtprofils der besagten Struktur umfasst, um die allgemeinen Spezifikationen sowie die Benutzungsfunktionalitäten der besagten Struktur zu erfüllen, wobei sich dieses Profil unterteilt in:
- mindestens ein Tragelement (7) in Form eines entwickelbaren Teils, beispielsweise innerhalb eines Zylinders oder eines Kegels, das einem Balken entspricht;
- mindestens ein nebeneinander anzuordnenden Endelement (8a, 8b) in Form eines entwickelbaren Teils, das beispielsweise durch Schweißen fest mit einem anderen Endelement und oder einem Tragelement verbunden werden kann, **dadurch gekennzeichnet, dass** dieses Endelement (8a, 8b) nur aus gestanzten, gefalzten und geschweißten Blechteilen besteht, so dass das Verfahren keine Tiefzieh- oder Gesenkform-Etappe zu umfassen braucht.

2. Verfahren nach Anspruch 1, **dadurch gekennzeichnet, dass** eine Optimierungsetappe (2) der Abmessungen und/oder Formen der Profilelemente vorgesehen ist, um das Innenvolumen einer Struktur, wie einer Zisterne, zu maximieren, bei gleichzeitiger Einhaltung der allgemeinen Spezifikationen dieses Strukturtyps.

3. Verfahren nach Anspruch 1 oder 2, **dadurch gekennzeichnet, dass** eine Optimierungsetappe (3) der Abmessungen und/oder Formen der Profilelemente vorgesehen ist, um das Ausknicken und die Krümmungsänderungen in den Anschlusszonen der Profilelemente, beispielsweise in den Schweißzonen, zu minimieren.

4. Verfahren nach einem der Ansprüche 1 bis 3, **dadurch gekennzeichnet, dass** es eine Darstellungs- und Anzeigeetappe (4) der zusammengebauten oder nicht zusammengebauten Profilelemente in ihren entwickelten Formen oder gemäss einer Schnittebene oder einer beliebigen Außenansicht des Profils umfasst.

5. Verfahren nach einem der Ansprüche 1 bis 4, **dadurch gekennzeichnet, dass** es eine Aufzeichnungsetappe (5) der entwickelten Formen umfasst, mit Abmessungsdaten, wie die Maße der Profilelemente auf einem Träger, sowie eine Steueretappe einer Bearbeitungsmaschine, beispielsweise einer Stanzmaschine, mit Hilfe der Daten des Trägers.

6. Verfahren nach einem der Ansprüche 1 bis 5, **dadurch gekennzeichnet, dass** es eine Etappe (6a) umfasst, die darin besteht, zumindest eines der Profilelemente herzustellen, beispielsweise durch Stanzen und/oder Formgebung einer oder mehrerer Teile aus steifem Material, wie Metall, und Biegen oder Falten dieser Teile.

7. Verfahren nach Anspruch 6, **dadurch gekennzeichnet, dass** es nach der Herstellungsetappe 6a eines oder mehrerer Profilelemente eine Etappe (6b) umfasst, die darin besteht, diese Elemente zu einer Unterstruktur zusammenzusetzen, beispielsweise durch Schweißen.

8. Verfahren nach Anspruch 7, **dadurch gekennzeichnet, dass** es eine Etappe (6c) umfasst, die darin besteht, zumindest ein Element und/oder eine Unterstruktur des Profils an zumindest einem Organ der Struktur zu befestigen, das nicht zum Profil gehört, wie Ventil, Achse, Ständer, Kupplungsund oder Zugsystem, beispielsweise durch Schweißen und/oder Vernieten und/oder Verschrauben und/oder Kleben.

9. Verfahren nach einem der Ansprüche 1 bis 8, **dadurch gekennzeichnet, dass** bei einer Änderung der allgemeinen Spezifikationen und/oder der präzisen Funktionalitäten der Struktur eine Etappe vorgesehen ist, die darin besteht, die Formen und/oder Abmessungen zumindest eines Profilelements durch Berechnung zu korrigieren.

## Claims

1. A method of designing and producing a substantially rigid structure in the form of a containing envelope, in which, after choosing a type of structure such as a road tanker or silo and determination of the general specifications such as the form and functionalities of use such as the content or maximum internal pressure of the said type of structure, the method comprising an initial step (1) of calculating the overall profile of the said structure, able to satisfy the general specifications and the functionalities of use of the said structure, this profile being able to be broken down into:
- at least one bearing element (7) in the form of a developable piece, for example fitting within a cylinder or cone, and able to be assimilated to a beam;
- at least one juxtaposable joining element (8a, 8b) in the form of a developable piece, able to be rigidly connected, for example by welding, to another joining element and/or to a bearing element, **characterised in that**
this joining element (8a, 8b) consists solely of pieces of cropped metal sheet, folded and welded so that the method can include no pressing or forging step.

2. A method according to Claim 1, **characterised in that** there is provided a step (2) of optimisation of the dimensions and/or shapes of the elements of the profile able to maximise the internal volume of a structure such as a tank whilst complying with the general specifications of this type of structure.

3. A method according to Claim 1 or 2, **characterised in that** there is provided a step (3) of optimising the dimensions and/or shapes of the elements of the profile able to minimise inflections and changes in curvature in the areas of juxtaposition of the elements of the profile, for example the welding areas.

4. A method according to any one of Claims 1 to 3, **characterised in that** it comprises a step (4) of representation and display of the elements of the profile, assembled or not, in their developed forms or along any cutting plane or external view of the profile.

5. A method according to any one of Claims 1 to 4, **characterised in that** it comprises a step (5) of recording the developed forms comprising dimensional data such as dimensions of the elements of the profile on a support, and a step of controlling a processing machine, for example a cropping machine, using the data of the support.

6. A method according to any one of Claims 1 to 5, **characterised in that** it comprises a step (6a) consisting in fabricating at least one of the elements of the profile, for example by cropping and/or shaping one or more pieces of rigid material such as metal and curving or folding these pieces.

7. A method according to Claim 6, **characterised in that**, following step 6a of producing one or more elements of the profile, it comprises the step (6b) consisting in assembling these elements in a substructure, for example by welding.

8. A method according to Claim 7, **characterised in that** it comprises the step (6c) consisting in fixing at least one element and/or a substructure of the profile to at least one member of the structure which does not belong to the profile such as a valve, axle, upright, mooring and/or traction system, for example by welding and/or riveting and/or bolting and/or adhesive bonding.

9. A method according to any one of Claims 1 to 8, **characterised in that**, in the case of the modification of the general specifications and/or of the precise functionalities of the structure, there is provided a step consisting in correcting the forms and/or dimensions of at least one element of the profile by calculation.
